# EUROPEAN PATENT APPLICATION

(11) **EP 2 011 623 A1**
(43) Date of publication of application: **07.01.2009**
(21) Application number: 08104443.0
(22) Date of filing: 17.06.2008
(51) Int. Cl.: B29C 45/76

(54) **Step time display device for injection molding machine**

(30) Priority: 05.07.2007 JP 2007177208
(71) Applicant: FANUC LTD, Minamitsuru-gun, Yamanashi 401-0597 (JP)
(72) Inventor: Uchiyama, Tatsuhiro, Oshiono-mura, Minamitsuru-gun Yamanashi, 401-0597 (JP); Watanabe, Hiroshi, Oshiono-mura, Minamitsuru-gun Yamanashi 401-0597 (JP)
(74) Representative: Thum, Bernhard

(57) **Abstract**

A step time display device for an injection molding machine selects two events (a time measurement start event and a time measurement end event), time of each of which is to be measured, from among a plurality of events (starts and ends of mold clamping, injection, holding pressure, metering, mold opening, and ejection steps) in one molding cycle of an injection molding machine, and detects and stores occurrence time of each of the selected events. The step time display device calculates a time interval between the two events based on the occurrence time of each of the two stored events, and displays the calculated time interval on a screen.

## Description

### BACKGROUND OF THE INVENTION

### 1. Field of the Invention

The present invention relates to a step time display device for an injection molding machine for measuring and displaying operation time of operation steps executed by the injection molding machine so as to contribute to management of molding steps.

### 2. Description of the Related Art

Operation steps executed by an injection molding machine are roughly divided into a mold clamping step, an injection step, a holding-pressure step, a metering step, a mold opening step, and a molded article ejection step. A user analyzes time of each of these steps so as to evaluate stability of the molding steps and to intend to shorten a molding cycle.

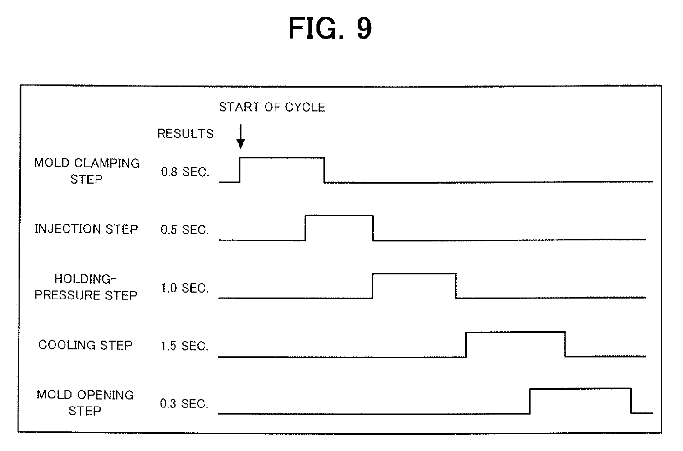

As shown in Fig. 9, as a method of measuring and displaying operation time required for the injection molding machine to execute operation steps, it is general to measure and display operation time of each step.

As disclosed in, for example, Japanese Patent Application Laid-Open No. 11-179520, a method of measuring and displaying time from start to end of operation performed by an actuator included in an injection molding machine which executes operation steps such as a mold clamping step and an injection step is conventionally used.

Furthermore, there are known conventional techniques for visually displaying molding steps on a screen. For example, a technique for measuring time of a series of molding steps such as a mold clamping step, an injection step, a charging step, a suck-back step, a mold opening step, and an ejection step in one cycle, and displaying the measured time of each of the steps on a timing chart (graph) with a horizontal axis indicating time is disclosed in Japanese Patent Application Laid-Open No. 2-55117. Further, a technique for displaying measurement data on a charging step, a mold opening step, an injection step, and an ejection step to correspond to time or screws is disclosed in Japanese Patent Application Laid-Open No. 5-42575. A technique for measuring execution time of steps executed in parallel with each other and displaying these parallel steps on a graph with a horizontal axis indicating time is disclosed in Japanese Patent Application Laid-Open No. 2006-15527.

As stated, according to the conventional techniques, the execution time of each of the operation steps such as injection step and mold clamping step is displayed, display contents are analyzed, stabilities of the molding steps are evaluated, and such considerations as shortening of the molding cycle are given.

However, the conventional techniques have the following problems. In a recent molding process, simultaneous operations such as injection during mold clamping, mold opening during metering, ejection during mold opening, and ejection during mold clamping are increasingly performed so as to shorten cycle time. With the conventional method of measurement for each of these steps, it is disadvantageously impossible to measure necessary and appropriate time such as multiple operation execution time of these simultaneous operations, time of starting the simultaneous operations, and total execution time of operations including the simultaneous operations.

For example, if injection is started during a mold clamping step, time from start of mold clamping to start of injection is important, but time covering an entire mold clamping step is not so important from viewpoints of cycle time. Moreover, from viewpoints of molded article quality, time from start of injection to completion of mold clamping is important because of the problem of outgassing from between the molds (from within the mold) during mold clamping, but time covering entire mold clamping step is not so important in a similar way. As can be seen, it is desirable to measure time at arbitrary timing irrespective of start or end of an operation of each actuator if simultaneous operations are performed.

### SUMMARY OF THE INVENTION

It is, therefore, an object of the present invention to provide a step time display device for an injection molding machine capable of selecting arbitrary events such as a start and an end of each step of a molding operation and measuring and displaying a time interval between the selected events.

According to a first aspect of the present invention, there is provided a step time display device for an injection molding machine which comprises: a selection unit selecting, in measuring a time interval between two events, a first event being a time measurement start event and a second event being a time measurement end event from among a plurality of events in one molding cycle; a detection and storage unit which detects and stores occurrence time of each of the first and second events selected by the selection unit; and a display unit which calculates a time interval from occurrence of the first event to occurrence of the second event based on the occurrence time of each of the first and second events stored in the detection and storage unit, and displays the calculated time interval on a screen.

The display unit may display the occurrence of each of the first and second events selected by the selection unit on a logic chart with a horizontal axis indicating time.

According to a second aspect of the present invention, there is provided a step time display device for an injection molding machine which comprises: a selection unit selecting, in measuring a time interval between two events, a first event being a time measurement start event and a second event being a time measurement end event from among a plurality of events in one molding cycle; a time measurement unit which measures the time interval between the first and second events selected by the selection unit; a measured time storage unit which stores time intervals between the selected first and second events for a plurality of molding cycles, respectively; and a display unit which displays the time intervals between the first and second events for the plurality of molding cycles, stored in the measured time storage unit, on a trend chart with a horizontal axis indicating number of shots.

The time measurement unit may include a detection and storage unit detecting and storing occurrence time of each of the first and second events selected by the selection unit, and may measure the time interval between the first and second events based on the occurrence time of each of the first and second events stored in the detection and storage unit.

The step time display device for the injection molding machine according to the present invention is constituted as stated above. Therefore, an operator can easily measure time of a desired interval and display this measurement result as a time function. Furthermore, by displaying time measurement results for a plurality of molding cycles as a trend chart, it is possible to shorten one molding cycle based on the display of these measurement results and improve molded article quality.

### BRIEF DESCRIPTION OF THE DRAWINGS

The above and other objects and features of the present invention will be readily apparent from the description of the following embodiments with reference to the accompanying drawings, wherein:
FIG. 1 is a block diagram of principal constituent elements of a controller of an injection molding machine which constitutes a step time display device according to one embodiment of the present invention;
FIG. 2 is a list of events which the step time display device shown in Fig. 1 can select and designate;
FIG. 3 is a logic chart displaying measured time intervals between events selected and designated from among the events shown in FIG. 2;
FIG. 4 is a flowchart showing an algorithm of a step time measurement processing executed by a processor included in the step time display device shown in FIG. 1 during molding operation;
FIG. 5 is an explanatory diagram of an event occurrence time storage table provided in a memory (storing therein each event occurrence time) included in the step time display device shown in FIG. 1;
FIG. 6 is a flowchart showing an algorithm of a time measurement processing within the step time measurement processing shown in FIG. 4;
FIG. 7 is an example of a diagram of inter-event measured time storage table which stores therein measured time intervals between an occurrence time of one event and an occurrence time of another event;
FIG. 8 is a trend chart displaying a time trend between two selected events (time trends of measurement intervals); and
FIG. 9 is an example of logic chart which displays measurement operation time of each of operation steps for an injection molding machine according to a conventional technique.

### DETAILED DESCRIPTION OF THE PREFERRED EMBODIMENTS

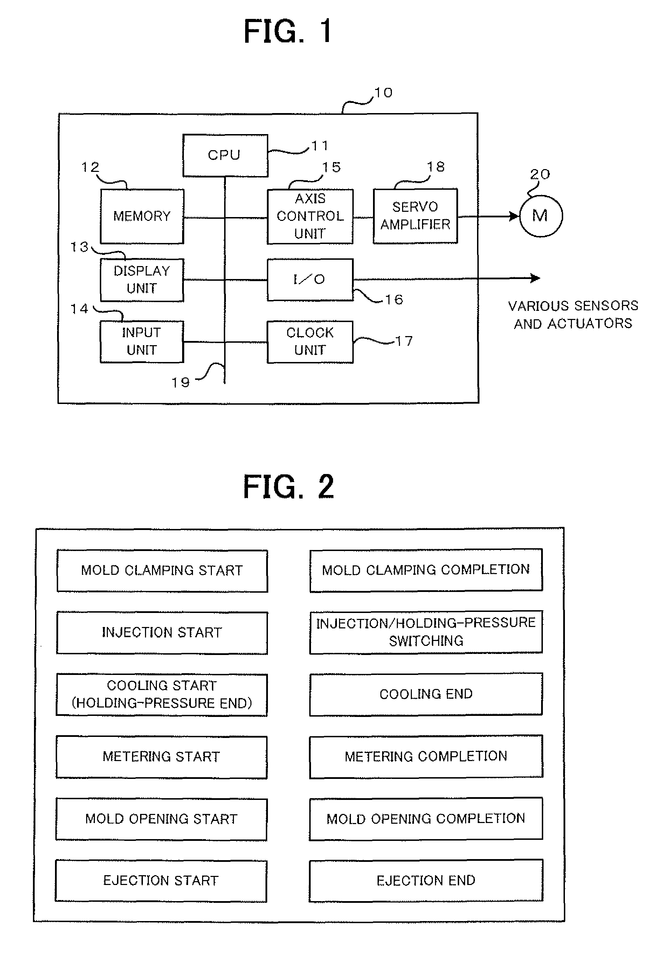

FIG. 1 is a block diagram of principal constituent elements of a controller for an injection molding machine that constitutes a step time display device for an injection molding machine according to one embodiment of the present invention. According to the embodiment, software for measuring and displaying step time is incorporated into the controller of the injection molding machine, and a step time display device is formed by using a display unit included in the controller.

In FIG. 1, reference symbol 10 denotes the controller that is the step time display device according to the embodiment for an injection molding machine. A memory 12 such as a ROM, a RAM or a flash memory, a display unit 13 constituted by a CRT, a liquid crystal or the like, an input unit 14 such as a keyboard, a axis control unit 15 controlling a servo motor 20 that drives movable axes of a mold clamping unit, an injection unit and the like of the injection molding machine, an input/output circuit (I/O) 16, and a clock unit 17 are connected to a processor (CPU) 11 by a bus 19.

The servo motor 20 driving the movable axes via a servo amplifier 18 is connected to the axis control unit 15. Although the axis control unit 15, the servo amplifier 18, and the servo motor 20 are provided for every movable axis, only one set of the axis control unit 15, the servo amplifier 18, and the servo motor 20 is shown in FIG. 1. The servo motor 20 includes a position/speed detector (not shown) detecting a position and a speed of the corresponding movable axis, so that position and speed feed back control is carried out based on a moving command issued from the processor 11 to the movable axis and an actual position and an actual speed of the movable axis fed back from the position/speed detector.

Various sensors and actuators provided in the injection molding machine are connected to the input/output circuit (I/O) 16.

The processor 11 outputs the moving command to the axis control unit 15 corresponding to each movable axis and controls operations of steps including mold clamping, injection, holding pressure, metering, mold opening, molded article ejection steps of the injection molding machine based on a program stored in the memory. This control over the injection molding machine is similar to the conventional control. According to the embodiment, software having a function to designate events in a molding operation and to measure and display a operation time interval between these designated events is further added to the memory 12, and the step time display device according to the present invention is constituted by this added software, the display unit 13, the input unit 14 and the like.

Molding operation steps of the injection molding machine generally include a mold clamping step of closing and clamping a mold, an injection step of moving a screw forward, and injecting and filling up molten resin into the mold, a holding-pressure step of controlling a pressure of the molten resin in the mold after the resin is filed up into the mold, a cooling step of cooling the resin in the mold, a metering step of melting the resin by rotating a screw while applying a backpressure to the screw and metering the molten resin, a mold opening step of opening the mold, an ejection step of ejecting a molded article from within the mold, and the like.

In the embodiment, events of a start and end of each of these steps in the molding operation are designated, a time interval between the designated events is measured, and the measured time interval is displayed.

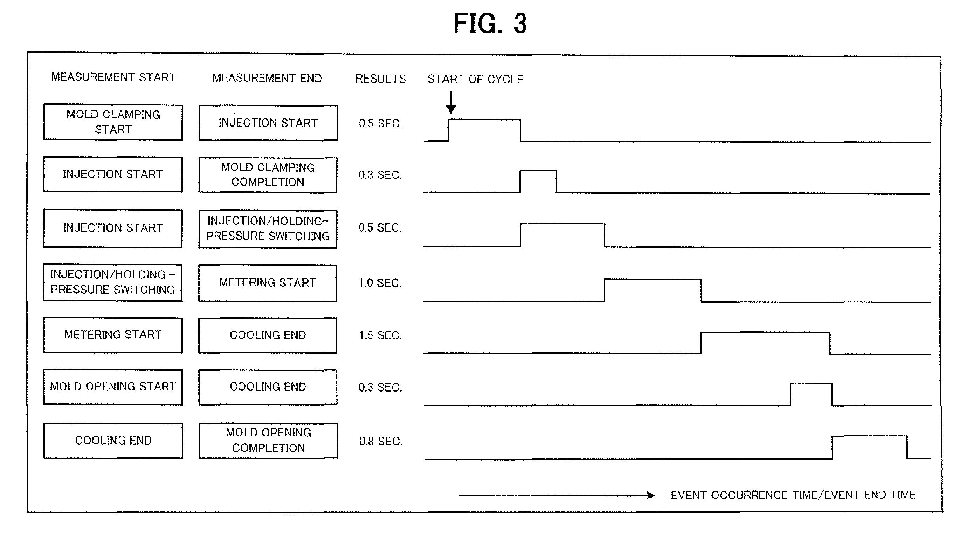

FIG. 2 is a list of events that can be selected and designated in the embodiment. FIG. 3 is a logic chart displaying measured time intervals between the events selected and designated as a time measurement interval according to the embodiment. First, a logic chart display command is input to the controller 10 from the input unit 14. The logic chart shown in FIG. 3 is displayed on a display screen of the display unit 13. Events at the start and end of a time measurement interval are set to boxes of measurement start and measurement end settings on the display screen, respectively. In this case, the list of events shown in FIG. 2 is displayed on the display screen in a window form, events are selected from the list of the events, and the selected events are set to the setting boxes, respectively. Alternatively, the events may be displayed in a lower portion of the display screen, events may be selected by a software key or the like, and the selected events may be set to the setting boxes, respectively. In another alternative, names of events in the list (e.g., mold opening start or injection start) may be input to the controller 10 using the input unit 14.

As shown in FIG. 2, in the embodiment, the following events are prepared as events that allows to be selected: "mold clamping start" indicating start of a mold clamping step, "mold clamping completion" indicating completion of the mold clamping step, "injection start" indicating start of an injection step, "injection/holding-pressure switching" indicating end of the injection step and start of a holding-pressure step, "cooling start (holding-pressure end)" indicating end of the holding-pressure step and start of a cooling step, "cooling end" indicating end of the cooling step, "metering start" indicating start of a metering step, "metering completion" indicating completion of the metering step, "mold opening start" indicating start of a mold opening step, "mold opening completion" indicating completion of the mold opening step, "ejection start" indicating start of an ejection step, and "ejection completion" indicating completion of the ejection step.

In the example shown in FIG. 3, in a first measurement interval, "mold clamping start" is set to a measurement start setting box and "injection start" is set to a measurement end setting box so as to measure and display a time interval of an interval from the mold clamping start (start of the mold clamping step) to the injection start. Likewise, a second measurement interval is set so as to measure and display a time interval from "injection start" to "mold clamping completion". A third measurement interval is set so as to measure and display a time interval from "injection start" to "injection/holding-pressure switching (injection completion)". A fourth measurement interval is set so as to measure and display a time interval of an interval from "injection/holding-pressure switching (holding-pressure start)" to "metering start". A fifth measurement interval is set so as to measure and display a time interval from "metering start" to "cooling end". A sixth measurement interval is set so as to measure and display a time interval from "mold opening start" to "cooling end". A seventh measurement interval is set so as to measure and display a time interval from "cooling end" to "mold opening completion".

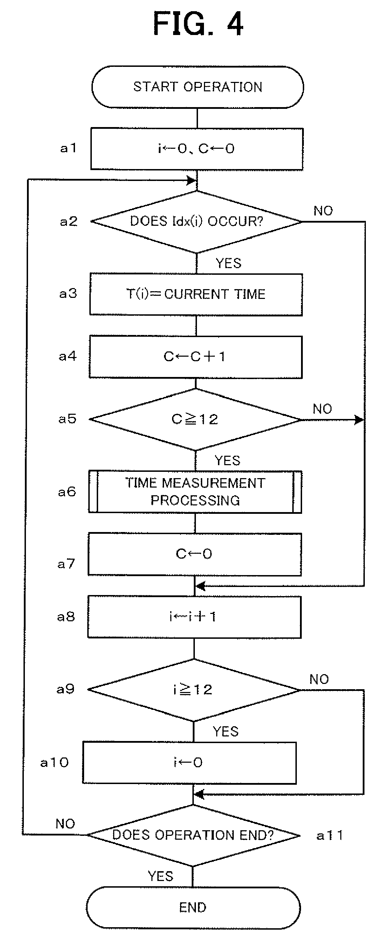

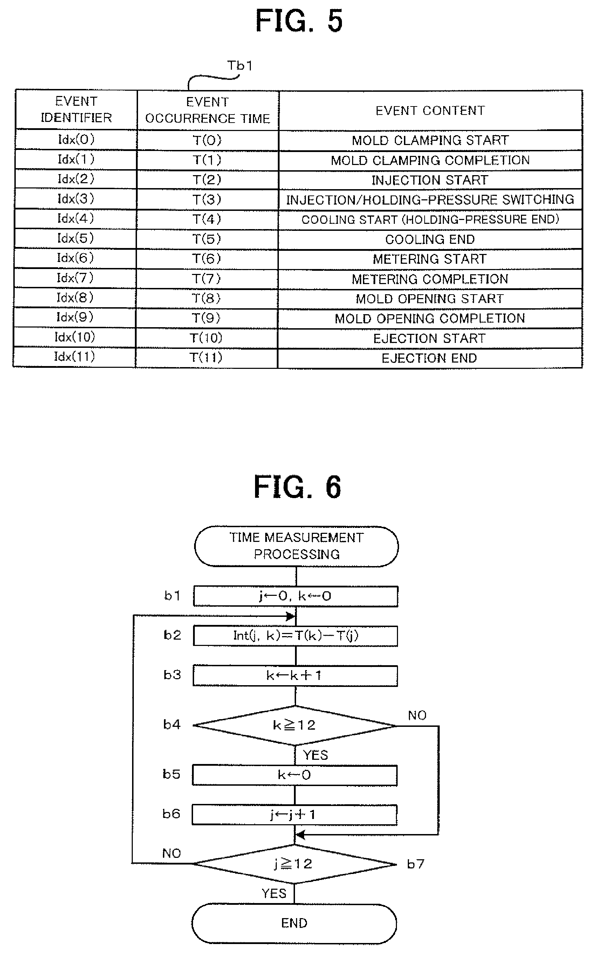

FIG. 4 is a flowchart showing an algorithm of a step time measurement processing executed, during molding operation, by the processor 11 included in the controller 10 of the injection molding machine which constitutes the step time display device according to the embodiment of the present invention. FIG. 5 is an example of diagram of an event occurrence time storage table Tb1 provided in the memory 12 which stores therein event occurrence times.

First, event identifiers Idx(0) to Idx(11) corresponding to 12 selectable events as shown in FIG. 2 are provided. Event occurrence time T(0) to T(11) is stored in the event occurrence time storage table Tb1 in association with the event identifiers Idx(0) to Idx(11), respectively.

If a molding operation starts, the processor 11 stars a processing shown in FIG. 4 as a step time measurement processing. First, the processor 11 sets an index i identifying an event identifier Idx(i) to "0" and resets a counter C (not shown), counting the number of events of which occurrence times are stored, to "0" (step a1). The processor 11 determines whether the event identified by the event identifier Idx(i) indicated by the index i occurs or not(step a2).

Determination as to whether or not the event occurs is made based on a command signal issued from the processor 11 based on a program or on a signal from one of the various sensors. For example, as a command of an event such as mold clamping start, injection start, metering start or ejection start is issued from a program, the processor 11 can determine whether the event occurs by reading the command. Furthermore, the processor 11 can determine whether or not an event such as mold clamping completion, injection/holding-pressure switching, metering completion, mold opening completion or ejection end occurs by determining whether or not a corresponding actuator (e.g., the servo motor 20) moves to a designated position (e.g., whether or not the servo motor 20 reaches the designated position and an in-position signal is issued). The processor 11 can determine whether or not an event such as cooling start (holding-pressure end) or cooling end occurs by checking whether a preset holding-pressure time or cooling time is timed up by a timer (not shown) or not.

If the processor 11 cannot confirm that the event identified by the event identifier Idx(i) occurs (step a2; No), the processing proceeds to step a8. If the processor 11 can confirm that the event identified by the event identifier Idx(i) occurs (step a2; Yes), the processor 11 stores current time indicated by the clock unit 17 as event occurrence time T(i) in the event occurrence time storage table Tb1 in association with the event identifier Idx(i) (step a3). "1" is added to the counter C (step a4). The processor 11 determines whether a value of the counter C is equal to or greater than the number of events (=12) (step a5). In this embodiment, the total number of events is "12", the counter C starts counting from "0", and "1" is added to the counter C whenever current time is stored. Therefore, if the counter C indicates "12" after "1" is added to the counter C (step a5; Yes), this means that the event occurrence time of each of all the 12 events is stored. Furthermore, each event occurs only once in one molding cycle (one shot). Due to this, if all the events occur and the occurrence time of the events is stored, no other event of which time is to be stored in the cycle (shot) is present. This means that one molding cycle (one shot) ends in the event occurrence time storage processing. The processing proceeds to step a6, at which the processor 11 performs a time measurement processing to be described later. If the value of the counter C is not equal to or greater than the number of events (=12) (step a5; No), the processing proceeds to step a8.

At step a8, the processor 11 increments the index i by "1". Further, the processor 11 determines whether the index i is equal to or greater than the number of selectable events (=12) (step a9). If the index i is not equal to or greater than the number of selectable events (=12) (step a9; No), the processor 11 determines whether the molding operation ends or not (step a11). If the molding operation does not end (step a11; No), the processing returns to step a2. Thereafter, processing in steps a2, a8, a9, a11, and a2 or processing in steps a2, a3, a4, a5, a8, a9, a11, and a2 are repeatedly executed while incrementing the index i by "1" until the index i reaches the number of all selectable events (=12). If the index i is equal to or greater than the number of selectable events (=12) (step a9; Yes), the processor 11 resets the index i to "0" (step a10) and determines whether the molding operation ends or not (step a11). If the molding operation does not end (step a11; No), the processing returns to step a2 and executes the above-stated procedures.

If the value of the counter C is equal to or greater than the number of selectable events (=12) and each of occurrence time T(0) to T(11) is stored in the event occurrence time storage table Tb1 for all the events (step a5; Yes), the processing proceeds to step a6, at which the processor 11 performs the time measurement processing. Further, the processor 11 resets the counter C to "0" (step a7) and processing proceeds to step a8.

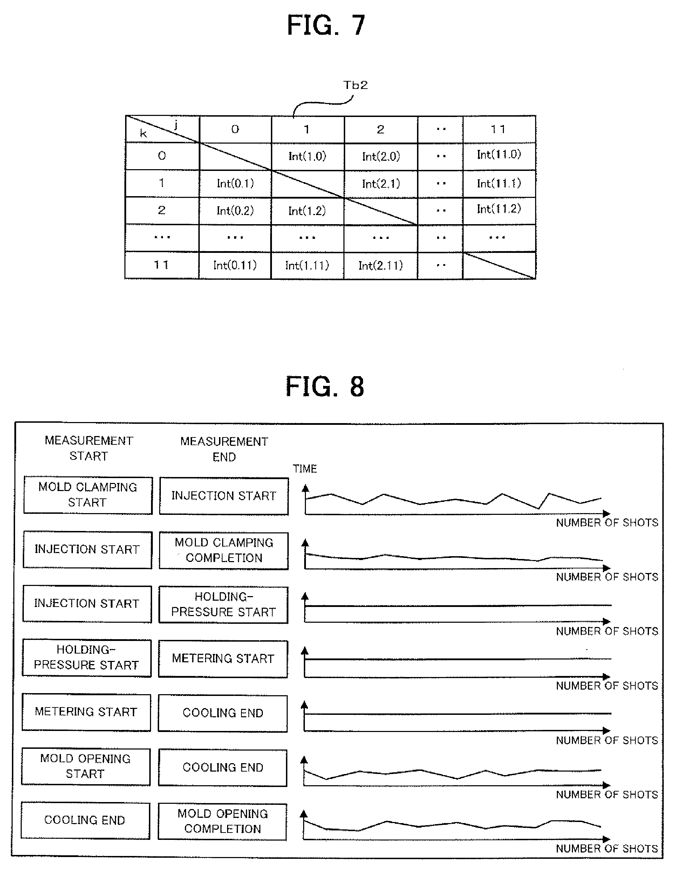

FIG. 6 is a flowchart showing an algorithm of the time measurement processing at step a6 in the step time measurement processing shown in FIG. 4. FIG. 7 is an example of a diagram of an inter-event measured time storage table Tb2 provided in the memory 12. The inter-event measured time storage table Tb2 stores therein measured time intervals each from occurrence time of one event to occurrence time of another event by measuring occurrence time of each event. In this embodiment, as many inter-event measured time storage tables Tb2 as a plurality of molding cycles (shots) are provided, and time intervals between occurrence time of one event and that of another event are stored cyclically as measured time in each inter-event measured time storage table Tb2 corresponding to each molding cycle (shot).

If the "time measurement processing" starts at step a6, the processor 11 sets indexes j and k to "0" (step b1) and calculates a time interval (measured time) between the events indicated by the indexes j and k, respectively as Int(j, k) (step b2). Namely, the processor 11 subtracts occurrence time T(j) stored in the event occurrence time storage table Tb1 in association with an event j (event identifier Idx(j)) from occurrence time T(k) stored in the event occurrence time storage table Tb1 in association with an event k (event identifier Idx(k)), thereby calculating the time interval Int(j, k) from the occurrence time of the event j to that of the event k, and stores the calculated time interval Int(j, k) in the corresponding inter-event measured time storage table Tb2.

The processor 11 increments the index k by "1" (step b3) and determines whether the index k is equal to or greater than the number of all selectable events (=12) (step b4). If the index k is not equal to or greater than the number of all selectable events (=12) (step b4; No), the processing proceeds to step b7. At step b7, the processor 11 determines whether the index j is equal to or greater than the number of all selectable events (=12). If the index j is not equal to or greater than the number of all selectable events (=12) (step b7, No), the processing returns to step b2. Thereafter, the processor 11 repeatedly executes the processing in steps b2 to b4 and b7 while incrementing the index k by "1" until the index k reaches the number of all selectable events (=12). If the processor 11 determines that the index k is equal to or greater than the number of all selectable events (=12) (step b4; Yes), the processor 11 resets the index k to "0" (step b5) and increments the index j by "1" (step b6), and determines whether the index j is equal to or greater than the number of all selectable events (=12) (step b7). If the index j is not equal to or greater than the number of all selectable events (=12) (step b7; No), the processing returns to step b2. In this way, the processor 11 stores measured time intervals Int(j, k) between the events in the inter-event measured time storage table Tb2 shown in FIG. 7 while incrementing the indexes k and j. If the index j is equal to or greater than the number of all selectable events (=12) (step b7; Yes), this means that the time intervals between the events are stored for all the events in the inter-event measured time storage tables Tb2 and, therefore, this "time measurement processing" ends.

In the inter-event measured time storage table Tb2 shown in FIG. 7, a time interval Int(0, 1) indicates j=0 and k=1, so that Int(0, 1)=T(k)-T(j)=T(1)-T(0). Referring to the event occurrence time storage table Tb1 shown in FIG. 5, T(1) is mold clamping completion time and T(0) is mold clamping start time. Accordingly, the time interval Int(0, 1) indicates a time interval from the mold clamping start to the mold clamping completion. Likewise, a time interval Int(0, 2) is a time interval from the mold clamping start time T(0) to injection start time T(2). A time interval Int(0, 11) is a time interval from the mold clamping start time T(0) to ejection end time T(11).

In this manner, the time intervals between the events are stored in the inter-event measured time storage table Tb2. If the difference (time interval) between the same event such as Int (0, 0), Int (1, 1)... or Int (11, 11) is calculated, the value is "0" and a corresponding box in the inter-event measured time storage table Tb2 shown in FIG. 7 is blank (N/A). Alternatively, "0" can be stored in the box.

If a command to display the logic chart displaying the time intervals between the selected and designated events as shown in FIG. 3 is input, the logic chart shown in FIG. 3 is displayed on the display screen of the display unit 13 and a graph showing the time intervals each between occurrence time of one selected event and that of the other selected event is displayed, with a horizontal axis of the graph indicating time. In the example shown in FIG. 3, in the first measurement interval, the measurement start is "mold clamping start" and the measurement end is "injection start". Accordingly, the occurrence time T(0) of the event (Idx(0)) indicating the "mold clamping start" and the occurrence time T(2) of the event (Idx(2)) indicating the "injection start" are read from the event occurrence time storage table Tb1 shown in FIG. 5. Further, a graph on which this time interval is at high level is displayed on the display screen of the display unit 13. Furthermore, the time interval between the events is displayed as a numeric value (0.5 second in the example shown in FIG. 3) as a result.

Likewise, in the example shown in FIG. 3, time intervals from time T(2) of the injection start to time T(1) of the mold clamping completion, from T(2) of the injection start to time T(3) of the injection/holding-pressure switching (injection end), from time T(3) of the injection/holding-pressure switching (holding-pressure start) to time T(6) of the metering start, from time T(6) of the metering start to time T(5) of the cooling end, from time T(8) of mold opening start to time T(5) of the cooling end, from time T(5) of the cooling end to time T(9) of the mold opening completion are displayed on the graph at high level and numeric values thereof are displayed as results. Since the graph displaying the logic chart has the horizontal axis indicating time, it is possible to visually recognize time of occurrence and time of end of each event.

When one molding cycle ends and the event occurrence time storage table Tb1 shown in FIG. 5 is updated, the display of the logic chart shown in FIG. 3 is updated by, for example, issuing a logic chart display update command before or after the time measurement processing at step a6 shown in FIG. 4.

Moreover, if a trend chart display command for illustrating a trend of the time interval between the two events (measurement interval) selected in one molding cycle (shot) is input from the input unit 14, the processor 11 draws a trend chart shown in FIG. 8 on the display screen of the display unit 13. In the trend chart shown in FIG. 8, a horizontal axis indicates the number of molding cycles (shots) and a vertical axis indicates measured time of the measurement interval. In this case, as the measurement start event and the measurement end event of each measurement interval, the events set on the logic chart shown in FIG. 3 are set as they are. If one of the events is changed or an event other than those on the logic chart is set, the event is selected from the list of events shown in FIG. 2 and set to each setting box. Alternatively, if the events are displayed in the lower portion of the display screen so as to allow events to be selected using the software key, the event is set to each setting box using this software key. In another alternative, the names of the events in the list may be input using the input unit 14, similarly to the settings of the logic chart.

The processor 11 reads the measured time intervals Int(j, k) each between the events corresponding to the event (Idx(j)) set as the measurement start event and the event (Idx(k)) set as the measurement end event are read from the inter-event measured time storage table Tb2 shown in FIG. 7 corresponding to each molding cycle (shot) and displays the read time intervals Int(j, k) at time series.

In the example shown in FIG. 8, in the first measurement interval, the "mold clamping start" is set as the measurement start event and the "injection start" is set as the measurement end event. Due to this, the measured time intervals Int (0, 2) from the mold clamping start to the injection start in the respective molding cycles (shots) are read from the inter-event measured time storage tables Tb2. As shown in FIG. 8, the processor 11 draws the graph with the horizontal axis indicating the number of molding cycles (shots) and the vertical axis indicating measured time.

Likewise, in the second measurement interval, the "injection start" is set as the measurement start event and the "mold clamping completion" is set as the measurement end event. Due to this, the time intervals Int(2, 1) are read from the inter-event measured time storage tables Tb2 corresponding to the respective molding cycles (shot) and displayed as shown in FIG. 8.

Since measured time (time interval) is from the "injection start" to the "injection/holding-pressure switching" in the third measurement interval, the time intervals Int(2, 3) are read from the inter-event measured time storage tables Tb2 corresponding to the respective molding cycles (shot) and displayed as shown in FIG. 8. Since measured time (time interval) is from the "holding-pressure start" to the "metering start" in the fourth measurement interval, the time intervals Int(3, 6) are read from the inter-event measured time storage tables Tb2 corresponding to the respective molding cycles (shot) and displayed as shown in FIG. 8. Since measured time (time interval) is from the "metering start" to the "cooling end" in the fifth measurement interval, the time intervals Int(6, 5) are read from the inter-event measured time storage tables Tb2 corresponding to the respective molding cycles (shot) and displayed as shown in FIG. 8. Since measured time (time interval) is from the "mold opening start" to the "cooling end" in the sixth measurement interval, the time intervals Int(8, 5) are read from the inter-event measured time storage tables Tb2 corresponding to the respective molding cycles (shot) and displayed as shown in FIG. 8. Since measured time (time interval) is from the "cooling end" to the "mold opening completion" in the seventh measurement interval, the time intervals Int(5, 9) are read from the inter-event measured time storage tables Tb2 corresponding to the respective molding cycles (shot) and displayed as shown in FIG. 8.

Since the measured time of each molding cycle (shot) is displayed for every measurement interval in the trend chart shown in FIG. 8, the stability of the molding steps (molding cycles) can be evaluated.

In the embodiment stated above, in the processing shown in FIG. 6, that is, in the processing at step a6 shown in FIG. 4, the measured time intervals Int (j, k) between the events are calculated for all the events. Since what is displayed is the time between the selected measurement start event and the selected measurement end event, only the time between the selected events can be calculated and stored. In this case, it suffices to subtract the occurrence time T(j) of the measurement start event selected as the time measurement event from the occurrence time T(k) of the measurement end event selected as the time measurement event and to store the subtraction result. For example, if the measurement start event and the measurement end event are set as "mold closing start" and "injection start" as shown in FIG. 8, respectively, the event occurrence time T(0) of the "mold clamping start" event stored in the event occurrence time storage table Tb1 is subtracted from the event occurrence time T(2) of the "injection start event" stored in the event occurrence time storage table Tb1, and the subtraction result may be stored as the measured time from the set "mold clamping start" event to the set "injection start" event.

## Claims

1. A step time display device for an injection molding machine, comprising:
a selection unit selecting, in measuring a time interval between two events, a first event being a time measurement start event and a second event being a time measurement end event from among a plurality of events in one molding cycle;
a detection and storage unit detecting and storing occurrence time of each of the first and second events selected by the selection unit; and
a display unit calculating a time interval from occurrence of the first event to occurrence of the second event based on the occurrence time of each of the first and second events stored in the detection and storage unit, and displaying the calculated time interval on a screen.

2. The step time display device for an injection molding machine according to claim 1,
wherein the display unit displays the occurrence of each of the first and second events selected by the selection unit on a logic chart with a horizontal axis indicating time.

3. A step time display device for an injection molding machine, comprising:
a selection unit selecting, in measuring a time interval between two events, a first event being a time measurement start event and a second event being a time measurement end event from among a plurality of events in one molding cycle;
a time measurement unit measuring the time interval between the first and second events selected by the selection unit;
a measured time storage unit storing time intervals between the selected first and second events for a plurality of molding cycles, respectively; and
a display unit displaying the time intervals between the first and second events for the plurality of molding cycles, stored in the measured time storage unit, on a trend chart with a horizontal axis indicating number of shots.

4. The step time display device for an injection molding machine according to claim 3,
wherein the time measurement unit includes a detection and storage unit detecting and storing occurrence time of each of the first and second events selected by the selection unit, and measures the time interval between the first and second events based on the occurrence time of each of the first and second events stored in the detection and storage unit.

5. The step time display device for an injection molding machine according to claim 1,
wherein the detection and storage unit determines event occurrence by reading a molding program command.

6. The step time display device for an injection molding machine according to claim 1,
wherein the detection and storage unit determines that an event occurs by detecting that an actuator constituting the injection molding machine or a servo motor driving the actuator reaches a designated position.

7. The step time display device for an injection molding machine according to claim 1,
wherein the detection and storage unit determines event occurrence if a preset time is timed up by a timer.
